# EUROPÄISCHE PATENTSCHRIFT

(11) **EP 2 625 580 B1**
(45) Veröffentlichungstag und Bekanntmachung des Hinweises auf die Patenterteilung: **31.08.2016**
(21) Anmeldenummer: 11763901.3
(22) Anmeldetag: 23.09.2011
(51) Int. Cl.: G05D 23/24, F01N 11/00, G01N 27/00

(54) **VERFAHREN ZUR EINSTELLUNG EINER TEMPERATUR EINES SENSORELEMENTS**
METHOD FOR ADJUSTING A TEMPERATURE OF A SENSOR ELEMENT
PROCÉDÉ DE RÉGLAGE D'UNE TEMPÉRATURE D'UN ÉLÉMENT CAPTEUR

(30) Priorität: 06.10.2010 DE 102010042013
(43) Veröffentlichungstag der Anmeldung: 14.08.2013
(73) Patentinhaber: Robert Bosch GmbH, 70442 Stuttgart (DE)
(72) Erfinder: SCHNEIDER, Jens, 71229 Leonberg (DE); FEY, Michael, 75446 Wiernsheim (DE); BURAK, Ingmar, 70437 Stuttgart (DE); RIEMANN, Markus, 71665 Vaihingen/Enz (DE); HAMANN, Reinhard, 74321 Bietigheim-Bissingen (DE)
(86) Internationale Anmeldenummer: PCT/EP2011/066595
(87) Internationale Veröffentlichungsnummer: WO 2012/045599

(56) Entgegenhaltungen:
- WO-A1-2010/072490
- WO-A1-2010/108732
- DE-A1-102006 053 808
- US-A- 5 974 857

## Beschreibung

### Stand der Technik

Aus dem Stand der Technik ist eine Vielzahl von Sensorelementen zur Erfassung mindestens einer Eigenschaft eines Gases in einem Messgasraum bekannt. Dabei kann es sich grundsätzlich um eine beliebige Eigenschaft des Gases handeln, beispielsweise eine physikalische und/oder chemische Eigenschaft des Gases. Insbesondere wird die Erfindung im Folgenden beschrieben unter Bezugnahme auf Sensorelemente zur Erfassung eines Anteils, also beispielsweise eines Partialdrucks und/oder eines Prozentsatzes, mindestens einer Gaskomponente in dem Gas. Bei der Gaskomponente kann es sich insbesondere um Sauerstoff handeln. Auch andere Gaskomponenten können jedoch alternativ oder zusätzlich nachgewiesen werden, beispielsweise Stickoxide, Kohlenwasserstoffe oder andere Gaskomponenten. Die Erfindung ist jedoch nicht auf den Nachweis von Gaskomponenten beschränkt, sondern es können grundsätzlich, alternativ oder zusätzlich, auch andere Eigenschaften des Gases nachgewiesen werden.

Zum Nachweis von Gaskomponenten werden insbesondere Sensorelemente eingesetzt, welche auf der Verwendung mindestens eines Festelektrolyten, also eines ionenleitenden Festkörpers, beispielsweise eines Sauerstoff-Ionen leitenden Festkörpers, basieren. Derartige Festelektrolyte können beispielsweise auf Zirkoniumdioxid-Basis erstellt werden, beispielsweise Yttrium-stabilisiertes Zirkoniumdioxid und/oder Scandiumdotiertes Zirkoniumdioxid. Derartige Sensorelemente werden beispielsweise im Kraftfahrzeugbereich eingesetzt, um Gaskomponenten im Abgas einer Verbrennungsmaschine mit mindestens einem Motor nachzuweisen. Beispiele derartiger Sensorelemente sind in Robert Bosch GmbH: Sensoren im Kraftfahrzeug, Ausgabe 2007, Seiten 154-159 beschrieben. Die dort dargestellten Sensorelemente können grundsätzlich auch nach einem Verfahren gemäß der vorliegenden Erfindung betrieben werden und/oder im Rahmen einer erfindungsgemäßen Sensorvorrichtung eingesetzt werden.

Eine Lambdasonde beruht in der Regel auf der Verwendung mindestens einer galvanischen Sauerstoffkonzentrationszelle mit mindestens einem Festelektrolyt. Alternativ oder zusätzlich können auch sogenannte Pumpzellen eingesetzt werden. Lambdasonden können einen einzelligen oder auch einen mehrzelligen Aufbau aufweisen, wobei ebenfalls exemplarisch auf den genannten Stand der Technik verwiesen werden kann. In der Regel weisen derartige Sensorelemente mindestens eine Heizvorrichtung auf. So wird der Festelektrolyt typischerweise bei einer Aktivierungstemperatur von ca. 350°C für Sauerstoffionen leitend. Die Nominaltemperatur üblicher Lambdasonden liegt in der Regel deutlich höher, beispielsweise bei 650°C-850°C. Um die Nominaltemperatur unabhängig von den Umgebungsbedingungen, beispielsweise der Temperatur des Abgases, zu erreichen, wird das Sensorelement in der Regel aktiv elektrisch beheizt. Aus diesem Grund verfügen die meisten Sensorelemente der genannten Art über mindestens ein elektrisches Heizelement, welches im Folgenden allgemein auch als Heizvorrichtung bezeichnet wird und welches in der Regel von mindestens einem Steuergerät angesteuert wird. Beispielsweise weisen bekannte Lambdasonden auf Zirkoniumdioxid-Basis einen integrierten Platin-Heizer auf, der in der Regel so ausgelegt ist, dass dieser unter normalen Betriebsbedingungen eine größere Heizleistungsreserve aufweist. Dies bedeutet, dass die für den Betrieb des Sensorelements erforderliche Heizerspannung oder Heizleistung in der Regel deutlich kleiner ist als die zur Verfügung stehende Versorgungsspannung oder Versorgungsleistung. Beispielsweise werden bei typischen Sensorelementen der oben genannten Art Betriebstemperaturen von 780°C bereits mit Heizerspannungen von weniger als 8 V erreicht. In vielen Fällen wird das Sensorelement dabei nicht mit einer Gleichspannung sondern mit einer getakteten Effektivspannung betrieben, die durch Pulsweitenmodulation einer höheren Gleichspannung (Batteriespannung) erzeugt wird. Dementsprechend kann unter dem Begriff einer Heizerspannung im Folgenden sowohl die tatsächliche Spannung verstanden werden, mit welcher die Heizvorrichtung beaufschlagt wird, als auch alternativ eine effektive Spannung.

Das Ausgangssignal eines Sensorelements der oben genannten Art ist in der Regel funktional stark abhängig von der Temperatur des Sensorelements. Zur Verbesserung der Signalgenauigkeit ist es daher anzustreben, die Temperatur des Sensorelements von Änderungen der Abgastemperatur zu entkoppeln und möglichst konstant zu halten. Üblich ist zum Beispiel eine Temperatursteuerung der Heizerspannung einer Sprungsonde über ein betriebspunktabhängiges Kennfeld mit den Eingangsgrößen einer Abgastemperatur und einem Abgasmassenstrom. Eine erhöhte Temperaturgenauigkeit ergibt sich durch eine Temperaturregelung des Sensorelements. Als Regelgröße kann zum Beispiel ein Innenwiderstand Rᵢ des Sensorelements verwendet werden, beispielsweise mindestens einer Zelle des Sensorelements, da in der Regel ein eindeutiger Zusammenhang zwischen dem Innenwiderstand und der Temperatur des Sensorelements besteht. Beispielsweise entspricht bei kommerziell erhältlichen Sprungsonden ein Innenwiderstand von 220 Ω einer Sensorelementtemperatur von 780°C. Eine entsprechende Temperaturregelung kommt auch in Breitbandsonden zum Einsatz.

Trotz der Verbesserung der Signalgenauigkeiten durch existierende Regelungen besteht nach wie vor Bedarf und Verbesserungspotential für exaktere Temperatureinstellungen, um die Signalgenauigkeit der Sensorelemente weiter zu verbessern. Insbesondere soll die Betriebstemperatur des Sensorelements unabhängig von der Abgastemperatur einstellbar sein, um die Signalgenauigkeit weiter zu erhöhen und damit wiederum geringere Emissionen und robustere Diagnosen zu ermöglichen. Gleichzeitig soll eine Ansteuerung mit einer hohen Heizleistungsreserve möglich sein, ohne dass die Gefahr der Zerstörung des Sensorelements durch eine Überhitzung bei Beheizung im grundsätzlich zusätzlichen Bordnetzspannungsbereich besteht. Weiterhin soll das Sensorelement einer Abgassonde bei möglichst konstanter Temperatur betreibbar sein und gleichzeitig vor Überhitzung geschützt werden.

Die DE 10 2006 053 808 A1 und die US 5,974, 857 offenbaren Verfahren zur Bestimmung der Temperatur eines Messfühlers.

### Offenbarung der Erfindung

Zur Verbesserung bekannter Sensorelemente und Verfahren zum Betreiben dieser Sensorelemente sowie zur zumindest teilweisen Realisierung der oben genannten Ziele werden dementsprechend ein Verfahren zur Einstellung einer Temperatur eines mittels einer Heizvorrichtung beheizbaren Sensorelements zur Erfassung mindestens einer Eigenschaft eines Gases in einem Messgasraum sowie eine Sensorvorrichtung zur Erfassung mindestens einer Eigenschaft eines Gases in einem Messgasraum vorgeschlagen. Wie oben beschrieben, kann die Erfassung der mindestens einen Eigenschaft insbesondere eine Bestimmung eines Anteils einer Gaskomponenten in dem Gas sein. Bei der Gaskomponente kann es sich insbesondere um eine oder mehrere der Gaskomponenten Sauerstoff, Stickstoff, Stickoxide, Kohlenwasserstoffe oder andere Komponenten handeln. Bei dem Gas kann es sich insbesondere um ein Abgas handeln, insbesondere ein Abgas einer Verbrennungsmaschine, und bei dem Messgasraum insbesondere um einen Abgastrakt, beispielsweise einen Abgastrakt in einem Kraftfahrzeug. Auch andere Einsatzgebiete sind jedoch grundsätzlich möglich.

Das Verfahren dient zur Einstellung einer Temperatur des mittels einer Heizvorrichtung beheizbaren Sensorelements. Unter einer Einstellung einer Temperatur kann dabei eine Einstellung auf eine fest vorgegebene oder auch auf eine variabel vorgegebene Temperatur verstanden werden, wobei auch Temperaturverläufe vorgebbar sind. Unter einer Einstellung kann, wie unten noch näher ausgeführt wird, eine Steuerung und/oder eine Regelung der Temperatur subsummiert werden. Die Heizvorrichtung kann insbesondere eine resistive Heizvorrichtung umfassen, also beispielsweise mindestens einen Heizwiderstand, welcher beispielsweise durch Beaufschlagung mit einer Heizerspannung und/oder einem Heizerstrom resistiv beheizbar sein kann. Das vorgeschlagene Verfahren umfasst die im Folgenden beschriebenen Verfahrensschritte, welche vorzugsweise, jedoch nicht notwendigerweise, in der dargestellten Reihenfolge durchgeführt werden können. Einzelne oder mehrere Verfahrensschritte können auch zeitlich parallel, zeitlich überlappend oder einzeln oder zu mehreren wiederholt durchgeführt werden oder über längere Zeiträume durchgeführt werden. Das Verfahren kann darüber hinaus weitere, nicht aufgeführte Verfahrensschritte umfassen.

In einem ersten Verfahrensschritt wird mindestens ein Istwert mindestens einer Regelgröße des Sensorelements erfasst. Unter einer Regelgröße kann dabei grundsätzlich eine beliebige Messgröße des Sensorelements verstanden werden, welche für die Temperatureinstellung von Relevanz ist, insbesondere eine elektrische und/oder thermische Messgröße, welche direkt oder indirekt mit der Temperatur korreliert, also eine Messgröße, welche einen Rückschluss auf eine aktuelle Temperatur des Sensorelements oder eines Bereichs des Sensorelements ermöglicht. Beispiele von Regelgrößen werden unten noch näher erläutert. Anstelle der eigentlichen Messgröße können auch aus dieser Messgröße abgeleitete Größen verwendet werden, beispielsweise interpolierte, extrapolierte, gefilterte, verstärkte, digitalistisierte oder andere Werte. Unter einem Istwert der mindestens einen Regelgröße wird dabei ein aktueller Wert verstanden, also ein Messwert oder aus dem Messwert abgeleiteter Wert der Regelgröße, welcher zum gegenwärtigen Zeitpunkt oder zu einem Zeitpunkt erfasst wurde, welcher vorzugsweise nicht mehr als einige Sekunden, beispielsweise nicht mehr als 10 Sekunden, insbesondere nicht mehr als 5 Sekunden, vorzugsweise nicht mehr als 1 Sekunde oder sogar nicht mehr als 100 Millisekunden zurückliegt.

In einem weiteren Verfahrensschritt wird mindestens ein Sollwert der zumindest einen Regelgröße ermittelt. Unter einem Sollwert wird dabei ein Wert der Regelgröße verstanden, auf welchen die Regelgröße exakt oder unter Vorgabe einer oder mehrerer Toleranzschwellen, eingestellt werden soll. Die Ermittlung des Sollwerts kann insbesondere dadurch erfolgen, dass dieser Sollwert von einer von dem Sensorelement getrennten Vorrichtung bereitgestellt wird, beispielsweise in dem dieser Sollwert fest vorgegeben wird oder, wie unten noch näher erläutert wird, unter Berücksichtigung mindestens einer Steuergröße, die den Einfluss einer Umgebung des Sensorelement auf die Temperatur des Sensorelements charakterisiert, bestimmt wird. Zur Ermittlung des Sollwerts können dementsprechend beispielsweise mindestens eine Datenverarbeitungsvorrichtung und/oder mindestens eine elektronische Tabelle und/oder eine andere Art von Vorrichtung vorgesehen sein, welche den mindestens einen Sollwert ermittelt und für das Verfahren bereitstellt.

In einem weiteren Verfahrensschritt wird mindestens eine Stellgröße der Heizvorrichtung mittels mindestens eines Vergleichs des Sollwerts und des Istwerts erzeugt. Unter einer Stellgröße ist dabei eine Größe, vorzugsweise ein elektrisches Signal und/oder eine digitale Information, zu verstehen, mittels derer die Heizvorrichtung unmittelbar oder indirekt angesteuert werden kann. Diese Stellgröße kann somit beispielsweise, wie unten noch näher ausgeführt wird, beispielsweise eine Heizleistung, eine Heizerspannung (wobei aktuelle oder auch effektive Heizerspannungen verwendet werden können), einen Heizstrom oder ähnliche Größen umfassen, mittels derer die Heizvorrichtung unmittelbar beaufschlagt werden kann. Alternativ oder zusätzlich kann die mindestens eine Stellgröße optional jedoch auch derart ausgestaltet sein, dass diese zunächst weiterverarbeitet werden muss, bevor diese zur Beaufschlagung der Heizvorrichtung dient, wobei beispielsweise mindestens ein Stellglied (beispielsweise mindestens ein Heizspannungsgenerator und/oder mindestens ein Verstärker) eingesetzt werden können.

In einem weiteren Verfahrensschritt wird mindestens ein Kontrollschritt durchgeführt. In diesem Kontrollschritt wird mindestens ein zur Einstellung der Temperatur mittels des vorgeschlagenen Verfahrens verwendeter Parameter überprüft und die mindestens eine Stellgröße in Abhängigkeit von der Überprüfung beeinflusst. Der zur Einstellung der Temperatur verwendeten Parameter ist die Stellgröße selbst. Unter einer Überprüfung kann insbesondere, wie unten ebenfalls noch näher ausgeführt wird, eine Abfrage verstanden werden, ob der mindestens eine Parameter mindestens einer vorgegebenen Bedingung genügt oder nicht. Beispielsweise können, wie unten noch näher ausgeführt wird, eine oder mehrere Schwellwertbedingungen vorgegeben werden. Unter einer Beeinflussung der mindestens einen Stellgröße in Abhängigkeit von der Überprüfung kann dabei eine direkte oder indirekte Beeinflussung der Stellgröße verstanden werden, beispielsweise indem die Stellgröße oder eine auf die Stellgröße einwirkende, vorgeschaltete Größe gezielt verändert wird. Die Beeinflussung erfolgt erfindungsgemäß derart, dass die Stellgröße auf einen sicheren Wert limitiert wird, wenn der mindestens eine Parameter, für eine gewisse Zeit einen Grenzwert über- oder unterschreitet.

Nach Durchführung der genannten Verfahrensschritte kann die Heizvorrichtung insbesondere mit der mindestens einen Stellgröße und/oder mit mindestens einer aus der Stellgröße abgeleiteten weiteren Stellgröße, beispielsweise unter Zwischenschaltung eines oder mehrerer Stellglieder, beaufschlagt werden. Die Korrektur der Stellgröße folgt vorzugsweise vor der Beaufschlagung der Heizvorrichtung.

Besonders bevorzugt ist es, wenn das Verfahren derart durchgeführt wird, dass weiterhin mindestens eine Steuergröße erfasst wird. Unter einer Steuergröße ist dabei eine beliebige Größe zu verstehen, welche einen Einfluss einer Umgebung des Sensorelements auf die Temperatur des Sensorelements charakterisiert. Insbesondere kann die Steuergröße mindestens einen der folgenden Parameter umfassen: eine Umgebungstemperatur des Sensorelements, insbesondere eine Gastemperatur, beispielsweise eine Abgastemperatur, in dem Messgasraum; einen Betriebsparameter einer das Gas beinhaltenden, generierenden oder verwendenden Vorrichtung, insbesondere einen Betriebsbereich einer Verbrennungsmaschine, vorzugsweise einen Motorbetriebspunkt; einen Parameter, der einen in der Umgebung des Sensorelements auftretenden Gasstrom charakterisiert, insbesondere quantifiziert, beispielsweise einen Volumenstrom und/oder Massenstrom des Gases, beispielsweise des Abgases; einen Parameter, der eine in der Umgebung des Sensorelements auftretende Temperatur charakterisiert und insbesondere quantifiziert, insbesondere eine Abgastemperatur, eine Katalysatortemperatur und/oder eine Rohrwandtemperatur; eine Motordrehzahl; einen Motor-Lastzustand. Diese mindestens eine Steuergröße wird bereits in derzeitigen Abgassystemen in Kraftfahrzeugen in der Regel erfasst, da beispielsweise Abgastemperaturen für den Betrieb von Katalysatoren von Bedeutung sind, da Motorbetriebspunkte von einer Motorsteuerung ohnehin erfasst werden und da auch Abgasströme (Massenströme und/oder Volumenströme) beispielsweise bei einer Abgasrückführung von Bedeutung sind. Insofern können beispielsweise ohnehin erfasste Parameter oder Kombinationen derartiger Parameter als Steuergrößen für das vorgeschlagene Verfahren verwendet werden. Auch andere Parameter sind jedoch alternativ oder zusätzlich einsetzbar.

Wie oben dargestellt, umfasst das vorgeschlagene Verfahren eine Regelung der Heizvorrichtung. Optional kann diese Regelung mindestens eine Steuerung der Heizvorrichtung überlagert werden. Während bei einer Regelung aufgrund eines Vergleichs des Sollwerts und des Istwerts mindestens eine Stellgröße erzeugt wird, vorzugsweise automatisch, wobei eine Rückkopplung mit einem geschlossenen Wirkungskreis entstehen kann, erfolgt bei einer Steuerung lediglich eine Vorgabe einer Steuer-Führungsgröße, welche dann in der Steuerung in eine entsprechende Steuerstellgröße umgewandelt wird, ohne dass ein geschlossener Wirkungskreis verwendet wird. Die bei der Steuerung erzeugte mindestens eine Steuer-Stellgröße kann dabei der bei der Regelung erzeugten Stellgröße beispielsweise additiv, multiplikativ, subtraktiv oder auf andere Weise überlagert werden. Derartige Überlagerungen sind aus dem Stand der Technik grundsätzlich bekannt. Beispielsweise kann vor der Überlagerung eine unterschiedliche Verstärkung der bei der Regelung und bei der Steuerung erzeugten Stellgrößen folgen. Auch andere Arten der Überlagerung sind jedoch möglich. Die Überlagerung kann vor oder nach einem optionalen Stellglied erfolgen, beispielsweise vor oder nach einem Heizspannungsgenerator. Alternativ oder zusätzlich können auch für die Steuerung und für die Regelung unterschiedliche Stellglieder verwendet werden, beispielsweise jeweils eigenständige Heizspannungsgeneratoren, welche jeweils unabhängig voneinander Heizspannungen generieren, die anschließend, vor Beaufschlagung der mindestens einen Heizvorrichtung, überlagert werden können.

Die Steuerung der Heizvorrichtung kann insbesondere unter Berücksichtigung der mindestens einen Steuergröße erfolgen, beispielsweise einer oder mehreren der oben genannten Steuergrößen, welche einen Einfluss der Umgebung des Sensorelements auf die Temperatur des Sensorelements charakterisieren. Dabei können für die Regelung und die Steuerung jeweils dieselben Steuergrößen verwendet werden oder auch unterschiedliche Steuergrößen.

Die Ermittlung des oben beschriebenen Sollwerts kann insbesondere unter Berücksichtigung der mindestens einen Steuergröße erfolgen. Dies bedeutet, dass die Regelung auf die mindestens eine Steuergröße angepasst werden kann, die einen Einfluss einer Umgebung des Sensorelements auf die Temperatur des Sensorelements charakterisiert. Alternativ oder zusätzlich kann auch die Steuerung unter Berücksichtigung der mindestens einen Steuergröße erfolgen, beispielsweise indem eine Steuer-Führungsgröße entsprechend der mindestens einen Steuergröße ausgewählt wird. So kann beispielsweise die Temperatur des Gases in dem Messgasraum und/oder eine Strömung des Gases in dem Messgasraum berücksichtigt werden. Ist beispielsweise die Abgastemperatur hoch, so genügt in der Regel eine geringere Heizleistung, um beispielsweise die Temperatur des Sensorelements auf den entsprechenden Sollwert einzustellen.

Die mindestens eine Regelgröße kann insbesondere eine oder mehrere der folgenden Regelgrößen umfassen: mindestens einen Innenwiderstand des Sensorelements, insbesondere einen Innenwiderstand mindestens einer elektrochemischen Zelle des Sensorelements, also einer Kombination aus mindestens zwei Elektroden und mindestens einem die mindestens zwei Elektroden verbindenden Festelektrolyten; eine Temperatur des Sensorelements, welche beispielsweise mittels eines separaten Temperatursensors erfassbar sein kann; eine Spannung zwischen mindestens zwei Elektroden des Sensorelements, insbesondere zwischen mindestens zwei Elektroden einer Nernstzelle des Sensorelements; einen Strom zwischen mindestens zwei Elektroden des Sensorelements, insbesondere zwischen mindestens zwei Elektroden einer Pumpzelle des Sensorelements; beispielsweise einen Strom bei einer fest vorgegebenen Pumpspannung; einen elektrischen Widerstand einer leitenden Struktur, insbesondere einer leitenden Struktur des Sensorelements, beispielsweise einen elektrischen Widerstand einer Metallstruktur, beispielsweise einen elektrischen Widerstand einer Zuleitung und/oder eines metallischen Mäanders. Auch andere Regelgrößen oder Kombinationen der genannten und/oder andere Regelgrößen sind denkbar. Besonders bevorzugt ist die Verwendung mindestens eines Innenwiderstands oder mindestens einer den Innenwiderstand des Sensorelements charakterisierenden Größe als Regelgröße. Beispielsweise kann dieser Innenwiderstand dadurch gemessen werden, dass mindestens eine elektrochemische Zelle des Sensorelements kurzfristig mit einem Spannungs- und/oder Strompuls beaufschlagt wird und die jeweils andere Größe, beispielsweise Strom bzw. Spannung gemessen wird. Diese Innenwiderstandsmessung kann zeitlich überlagert zu sonstigen Messungen des Sensorelements zur Erfassung der mindestens einen Eigenschaft des Gases durchgeführt werden oder auch intermittierend, beispielsweise indem die eigentliche Erfassung der Eigenschaft kurzfristig unterbrochen wird. So kann beispielsweise eine eigentlich als Nernstzelle verwendete Zelle des Sensorelements kurzfristig für eine Temperaturmessung eingesetzt werden.

Wie oben ausgeführt, kann die Stellgröße insbesondere eine Stellgröße sein, welche eine Heizleistung der Heizvorrichtung und damit einen Eintrag einer Wärmeenergie in das Sensorelement beeinflusst. Insbesondere kann die Stellgröße eine oder mehrere der folgenden Stellgrößen umfassen: eine an der Heizvorrichtung anliegende Heizerspannung; eine an der Heizvorrichtung anliegende Heizleistung; einen an der Heizvorrichtung anliegenden Heizstrom; einen Parameter einer Pulsweitenmodulation einer an der Heizvorrichtung anliegenden Heizleistung. Auch Kombinationen der genannten und/oder anderer Stellgrößen sind denkbar. Dabei können die genannten Stellgrößen direkt verwendet werden oder, wie oben erwähnt aus diesen Stellgrößen ableitbare oder diese Stellgröße generierende Größen.

Wie oben ausgeführt, wird in dem Kontrollschritt mindestens ein zur Einstellung der Temperatur verwendeter Parameter überprüft. Dieser mindestens eine Parameter ist die Stellgröße.

Zusätzlich können weitere Parameter und/oder Kombinationen der genannten (Istwert der Regelgröße, Sollwert der Regelgröße, Steuergröße, welche einen Einfluss der Umgebung des Sensorelements auf die Temperatur des Sensorelements charakterisiert. Bezüglich der möglichen Ausgestaltungen der Steuergröße kann dabei auf die obige Beschreibung verwiesen werden) und/oder anderer Parameter verwendet werden. In dem Kontrollschritt können dabei die genannten und/oder andere Parameter als einzelne Werte überprüft werden, beispielsweise in dem ein Einzelwertvergleich mit mindestens einem Schwellwert erfolgt. Alternativ oder zusätzlich können jedoch auch für einzelne, mehrere oder alle der genannten Parameter zeitliche
Verläufe der Parameter überprüft werden, beispielsweise indem zeitliche Schwankungen, die Historie des Verlaufs der genannten Parameter, Mittelwerte der genannten Parameter über einen vorgegebenen Zeitraum hinweg, gefilterte Verläufe der genannten Parameter oder andere aus den zeitlichen Verläufen der genannten Parameter und/oder andere Parameter abgeleitete Sekundärparameter oder Funktionen ausgewertet werden. Beispiele werden unten noch näher erläutert.

Die Überprüfung des Parameters in dem Kontrollschritt kann, wie oben beschrieben, auf verschiedene Weisen ausgestaltet sein, die auch beliebig miteinander kombinierbar sind. Insbesondere kann die Überprüfung des Parameters eine Abfrage umfassen, ob der Parameter (worunter, wie oben ausgeführt, ein einzelner Wert, mehrere Werte, abgeleitete Werte, Zeitverläufe oder ähnliche Werte zu verstehen sind) mindestens einem fest oder dynamisch vorgegebenen Schwellwert erreicht, unterschreitet oder überschreitet und optional gegebenenfalls wie lange dies der Fall ist. Beispielsweise kann mindestens eine Bedingung derart lauten, dass der Parameter einen vorgegebenen Schwellwert unterschreiten soll oder nicht überschreiten soll. Auch eine Bedingung, dass der Parameter einen vorgegebenen Schwellwert überschreiten oder nicht unterschreiten soll, kann vorgegeben werden. Der Schwellwert kann fest vorgegeben sein oder auch variabel, also dynamisch, beispielsweise angepasst auf eine oder mehrere externe Steuergrößen und/oder andere externe Parameter. Alternativ oder zusätzlich kann die Überprüfung auch eine Abfrage umfassen, ob eine zeitliche Schwankung des Parameters über einen Messzeitraum hinweg eine vorgegebene Maximalschwankung unterschreitet, erreicht oder überschreitet und optional gegebenenfalls wie lange dies der Fall ist. Entsprechend können auch hier bezüglich der Schwankungen gewisse Bedingungen gesetzt werden, wiederum alternativ oder zusätzlich kann der Kontrollschritt eine Überprüfung in Form eines Vergleichs eines zeitlichen Verlaufs des Parameters mit mindestens einem Sollverlauf umfassen. Ein derartiger Vergleich kann beispielsweise durch einen Vergleich von Kurven, Funktionen, Einzelwerten, mehreren Werten oder auf ähnliche Weise erfolgen. Beispielsweise können Abweichungen, Fehlerquadrate, Korrelationsfunktionen oder ähnliche Vergleiche herangezogen werden, um eine Übereinstimmung und/oder eine Abweichung des Verlaufs von dem Sollverlauf zu quantifizieren. Auch Kombinationen der genannten Überprüfungen untereinander und/oder mit anderen Überprüfungen sind möglich. Beispiele werden unten noch näher ausgeführt.

Weitere bevorzugte Ausgestaltungen des Verfahrens betreffen die Art der Beeinflussung der Stellgröße in dem Kontrollschritt. So kann diese Beeinflussung insbesondere eine oder mehrere der im Folgenden beschrieben Beeinflussungen umfassen. Beispielsweise kann die Beeinflussung eine Verwerfung eines einzelnen oder mehrerer Werte des Parameters und/oder eine darauf resultierende Beeinflussung der Stellgröße umfassen. Insbesondere kann eine Verwerfung stark schwankender zeitlicher Messwerte des Parameters erfolgen, beispielsweise eine Verwerfung von Messwerten des Parameters, welche außerhalb eines vorgegebenen Toleranzbereichs, beispielsweise eines vorgegebenen Toleranzbereichs um einen zeitlichen Mittelwert, liegen. Alternativ oder zusätzlich können eine Filterung des Istwerts und eine daraus resultierende Beeinflussung der Stellgröße erfolgen. Eine Filterung kann beispielsweise mittels eines Tiefpassfilters und/oder mittels eines Bandpassfilters erfolgen. Wiederum alternativ oder zusätzlich kann die Beeinflussung auch mindestens einen Mittelwertbildung des Istwerts und eine daraus resultierende Beeinflussung der Stellgröße umfassen. So kann beispielsweise ein Istwert über einen gewissen Zeitraum hinweg gemittelt werden, wobei beispielsweise ein geometrisches Mittel und/oder ein arithmetisches Mittel gebildet werden kann. Wiederum alternativ oder zusätzlich kann die Stellgröße auch durch einen fest oder dynamisch vorgegebenen Minimalwert oder Maximalwert ersetzt werden. Beispielsweise kann eine feste Untergrenze und/oder eine feste Obergrenze für die mindestens eine Stellgröße vorgegeben werden. Eine dynamische Vorgabe kann beispielsweise als Abweichung um eine Steuer-Stellgröße erfolgen, wenn eine Steuerung der Regelung überlagert wird. So kann beispielsweise um einen Steuer-Stellwert ein Toleranzbereich vorgegeben werden, innerhalb dessen die Stellgröße liegen soll. Beispiele werden unten noch näher beschrieben. Wiederum alternativ oder zusätzlich kann die Stellgröße auch auf einen Default-Wert gesetzt werden, beispielsweise 0 oder einen im Vergleich zu einem maximal möglichen Wert reduzierten Wert. Dies kann auch durch ein Abschalten einer Beaufschlagung der Heizvorrichtung mit Heizenergie erfolgen. Wiederum alternativ oder zusätzlich kann die Stellgröße um einen vorgegebenen Betrag oder einen vorgegebenen Korrekturfaktor verringert werden. Alternativ oder zusätzlich kann die Stellgröße auch mittels mindestens einer Korrekturfunktion in eine veränderte Stellgröße umgewandelt werden. Diese mindestens eine Korrekturfunktion kann grundsätzlich beliebige Korrekturen umfassen, beispielsweise Korrekturen mittels eines oder mehrerer Korrekturwerte, Korrekturfunktionen, Korrektur-Feldern oder ähnlichen, dem Fachmann grundsätzlich bekannten Korrekturen. Wiederum alternativ oder zusätzlich kann die Beeinflussung auch eine Veränderung mindestens eines Regelkreises der Einstellung der Temperatur umfassen, insbesondere eine Abschaltung eines integralen Anteils des Regelkreises. Wiederum alternativ oder zusätzlich kann die Beeinflussung auch eine vollständige und/oder teilweise Abschaltung der Regelung umfassen, beispielsweise indem vollständig auf eine Steuerung der Heizvorrichtung umgeschaltet wird, beispielsweise eine Steuerung der oben beschriebenen Art.

In einem weiteren Aspekt der vorliegenden Erfindung wird eine Sensorvorrichtung zur Erfassung mindestens einer Eigenschaft eines Gases in einem Messgasraum vorgeschlagen, insbesondere zur Bestimmung eines Anteils einer Gaskomponente. Die Sensorvorrichtung umfasst mindestens ein Sensorelement zur Erfassung der Eigenschaft.

Die Sensorvorrichtung umfasst weiterhin mindestens eine Heizvorrichtung zur Beheizung zumindest eines Teils des Sensorelements. Beispielsweise kann die mindestens eine Heizvorrichtung ganz oder teilweise Bestandteil des Sensorelements sein. Alternativ oder zusätzlich kann die mindestens eine Heizvorrichtung jedoch auch ganz oder teilweise in anderer Weise in der Sensorvorrichtung aufgenommen sein, beispielsweise als externes Bauteil. Im ersten Fall kann die Heizvorrichtung beispielsweise in ein keramisches Sensorelement integriert sein, beispielsweise einen Schichtaufbau des keramischen Sensorelements, wie dies beispielsweise bei Planarsonden in der Regel der Fall ist. Im zweiten Fall kann die Heizvorrichtung beispielsweise als Stäbchenheizer ausgestaltet sein, wie dies beispielsweise bei Fingersonden in der Regel der Fall ist.

Beispielsweise kann das Sensorelement ein Sensorelement mit mindestens einem Festelektrolyten der oben beschriebenen Art sein, insbesondere einem keramischen Festelektrolyten. Das Sensorelement kann insbesondere eine oder mehrere Zellen umfassen, also zwei Elektroden, welche über die Festelektrolyten miteinander in Verbindung stehen. Das Sensorelement kann einzellig oder auch mehrzellig ausgestaltet sein. Bezüglich möglicher Ausgestaltungen des Sensorelements kann beispielsweise auf den oben beschriebenen Stand der Technik verwiesen werden. Grundsätzlich sind alle Arten von Sensorelementen erfindungsgemäß einsetzbar, insbesondere keramische Sensorelemente. Die Sensorvorrichtung umfasst weiterhin mindestens eine Ansteuervorrichtung. Die Ansteuervorrichtung ist eingerichtet, um ein Verfahren gemäß einem oder mehreren der vorhergehenden Ansprüche durchzuführen. Die Ansteuervorrichtung kann zentral oder auch dezentral ausgestaltet sein und kann vollständig oder teilweise Software-implementiert und/oder Hardware-implementiert sein. Die Ansteuervorrichtung kann auch ganz oder teilweise beispielsweise in eine zentrale Motorsteuerung implementiert sein. Die Ansteuervorrichtung kann beispielsweise eine Sensor-Ansteuervorrichtung zum Ansteuern und/oder Auswerten des Sensorelements bzw. von Signalen des Sensorelements umfassen. Zur Implementierung des genannten Verfahrens kann die Ansteuervorrichtung weiterhin beispielsweise mindestens eine Regelvorrichtung umfassen, in welcher beispielsweise mindestens ein Regler enthalten sein kann. Zur Überlagerung einer optionalen Steuerung kann die Ansteuervorrichtung weiterhin mindestens eine Steuervorrichtung umfassen. Die Regelvorrichtung und die Steuervorrichtung können zusammen eine Heizelement-Ansteuervorrichtung bilden.

Das vorgeschlagene Verfahren und die vorgeschlagene Sensorvorrichtung weisen gegenüber bekannten Verfahren und Sensorvorrichtungen zahlreiche Vorteile auf. So kann insbesondere ein Sensorelement mit der Eigenschaft einer hohen Heizleistungsreserve realisiert werden, die zur Zerstörung des Sensorelements durch Überhitzung bei Beheizung im grundsätzlich zulässigen Bordnetzspannungsbereich führen könnte. Dieses Sensorelement und die Sensorvorrichtung können jedoch unabhängig vom Motorbetriebspunkt bei konstanter Temperatur betrieben werden und gleichzeitig derart eingerichtet sein, dass das Sensorelement vor einer Überhitzung geschützt werden kann. Das Verfahren lässt sich grundsätzlich auf alle aktiv beheizten und temperaturgeregelten oder temperaturgesteuerten Abgassensoren anwenden.

Um die Sensorelementtemperatur möglichst konstant zu halten, können insbesondere eine Temperatursteuerung und eine Temperaturregelung kombiniert werden, wie oben beschrieben. Beispielsweise kann die Steuerung mittels eines Kennfeldes betrieben werden, beispielsweise in dem, wie oben beschrieben, ein oder mehrere Steuergrößen erfasst werden, die den Einfluss der Umgebung des Sensorelements auf die Temperatur des Sensorelements charakterisieren. Eine derartige Steuerung kann insbesondere als Kennfeldvorsteuerung ausgestaltet sein, welcher die genannte Regelung überlagert sein kann. Eine derartige Überlagerung einer Steuerung mit einer Regelung bietet den Vorteil der hohen Genauigkeit einer Regelung, kombiniert mit einer schnellen Reaktion auf Änderungen des Motorbetriebspunkts, beispielsweise bei abrupten Lastwechseln, durch die vorzugsweise betriebspunktabhängigen Steuerungen. Dadurch werden hohe Reglerhübe vermieden, und die Regelung kann beispielsweise lediglich zur Korrektur einer Steuer-Stellgröße, die durch die Steuerung erzeugt wird, eingesetzt werden. Die Steuer-Stellgröße wird im Folgenden auch als Vorsteuerwert bezeichnet. Dieses Verfahren kann allgemein zu einer verbesserten Temperaturstabilisierung eingesetzt werden. Für die Temperaturregelung, insbesondere einer Sprungsonde, kann insbesondere ein Innenwiderstand einer Nernstzelle durch einen kurzzeitigen Strompuls zwischen Mess- und Referenzelektrode des Sensorelements gemessen werden. Dieses Verfahren ist aus dem Stand der Technik grundsätzlich bekannt und wird dort allerdings in der Regel für Diagnosezwecke eingesetzt. Im Rahmen des oben vorgeschlagenen Verfahrens kann der derartig erfasste Innenwiderstand als Istwert der mindestens einen Regelgröße des Sensorelements oder als Teil eines Istwerts des Wertes verwendet werden. Der ermittelte Innenwiderstand kann dann für die Regelung der Temperatur verwendet werden. Der bei herkömmlichen Regelverfahren bei ungenauer oder fehlerhafter Erfassung der Regelgröße auftretende Nachteil, dass die optimale Betriebstemperatur überschritten oder unterschritten werden kann oder dass sich bei starker Überschreitung der Betriebstemperatur sogar Beschädigungen am Sensorelement einstellen können, kann jedoch durch den vorgeschlagenen Kontrollschritt vermieden werden. Wenn beispielsweise permanent oder temporär ein erhöhter Übergangswiderstand im Signalkreis des Sensorelements auftritt, beispielsweise in Form von Kontaktierungsproblemen, neigen herkömmliche Temperaturregelungen dazu, den hohen gemessenen Widerstand auf den kleineren Zielwiderstand einzuregeln und erhöhen dabei die Heizerspannung. Dadurch wird das Sensorelement zu heiß betrieben, und die im Sensorelement integrierte Heizvorrichtung kann durchbrennen. So würden beispielsweise herkömmliche Sensorelemente auf eine Temperatur von > 1150°C aufgeheizt, wenn diese längere Zeit mit einer Heizerspannung von 11 V betrieben werden, was zum Durchbrennen des Heizers führt. Je größer die Heizleistungsreserve der Heizvorrichtung, insbesondere einer in das Sensorelement integrierten Heizvorrichtung, ist, desto größer ist die Gefahr einer schädigenden Überhitzung des Sensorelements. Zur Vermeidung dieser Überhitzung wird bei dem erfindungsgemäßen Verfahren die Regelung der Temperatur vorgesehen, welche optional durch eine oder mehrere Steuergrößen modifiziert oder unterstützt werden kann, die beispielsweise von einem Motorsteuerungssystem bereitgestellt werden können.

Bei dem vorgeschlagenen Verfahren kann insbesondere, wie oben beschrieben, bei der Überlagerung der Steuerung eine Kennfeld-basierte Vorsteuerung verwendet werden, mit welcher die vorgeschlagene Regelung überlagert werden kann oder mit welcher die vorgeschlagene Regelung auf andere Weise kombiniert werden kann. Diese Vorsteuerung kann insbesondere auf gemessenen oder modellierten Steuergrößen, welche auch als Kenngrößen bezeichnet werden, basieren, beispielsweise auf gemessenen oder modellierten Kenngrößen eines Abgassystems, die das Motorbetriebspunkt-abhängige Aufheiz- und Abkühlverhalten des Sensorelements gut widerspiegeln. Da eine feste Sensorelementtemperatur in der Regel einem festen Innenwiderstand des Sensorelements entspricht, kann die überlagerte Regelung zum Beispiel als PID-Regler umgesetzt werden, der den gemessenen Innenwiderstand Rᵢ beispielsweise mit einem Sollwert vergleichen kann. Auf diese Weise kann eine Stellgröße ermittelt werden, die beispielsweise eine Heizerspannungskorrektur oder eine auf andere Weise gestaltete Korrektur der Heizleistung relativ zur Sollspannung der Vorsteuerung ausgeben kann. Eine Überhitzung des Sensorelements aufgrund fehlerhafter Innenwiderstandsregelung wird durch die erfindungsgemäßen Gegenmaßnahmen zumindest weitgehend vermieden.

Beispiele für Fehlermöglichkeiten einer Innenwiderstandsregelung, die ohne Gegenmaßnahmen zur Überhitzung des Sensorelements bzw. zum Durchbrennen der Heizvorrichtung führen können, sind:
(1) Fehlerhafte Innenwiderstandsregelung aufgrund Erfassung ungenauer Widerstandsmesswerte. Ungenaue Widerstandsmesswerte können beispielsweise durch Toleranz in einer elektrischen Beschaltung in einem Steuergerät, durch zeitdiskrete und/oder nicht kontinuierliche Innenwiderstandsmessung und/oder durch Messung des Innenwiderstands während stark dynamischer Änderungen des Sensorelementsignals auftreten.
(2) Fehlerhafte Innenwiderstandsregelung aufgrund fehlerhafter Interpretation der Innenwiderstands-Messwerte. Zu einer Fehlinterpretation der Innenwiderstands-Messwerte kann es beispielsweise kommen, wenn in Folge von Korrosion und/oder Alterung zu große permanente oder temporäre Übergangswiderstände auftreten, beispielsweise in einem Stecker und/oder Kabelbaum des Sensorelementsignalkreises.
(3) Fehlerhafte Innenwiderstandsregelung durch temporär erhöhte Übergangswiderstände im Heizerkreis, beispielsweise in der Heizelement-Ansteuervorrichtung, beispielsweise durch einen Wackelkontakt.

Eine Abhilfe gegen die Fehlermöglichkeit (1) kann insbesondere eine Erkennung und ein Verwerfen von stark schwankenden zeitlich benachbarten Messwerten der Istwerte bieten. Die Erkennung und/oder das Verwerfen von derartigen Ausreißern kann es insbesondere erlauben, den Sensorelementinnenwiderstand nur bei stabiler Messsituation, beispielsweise nur bei stabilem Lambda, nicht jedoch bei instabiler Messsituation, beispielsweise bei Lambdasprüngen, die zu Messfehlern führen können, zu messen. Eine weitere Abhilfe gegen die Fehlermöglichkeit (1) kann eine Filterung der Messwerte, beispielsweise durch einen Tiefpass, eine zeitliche Mittelung oder einen gleitenden Mittelwert, sein.

Eine Abhilfe gegen die Fehlermöglichkeiten (2) und/oder (3) kann insbesondere die Begrenzung der Heizerleistung, beispielsweise der Heizerspannung und/oder des Heizerstroms und/oder eine entsprechende Beeinflussung einer Pulsweitenmodulation, bieten. Diese Abhilfe kann insbesondere wiederum auf gemessenen und/oder modellierten Kenngrößen des Abgassystems als Steuergröße basieren. Durch diese eine oder mehreren zusätzlichen Steuergrößen kann es insbesondere möglich sein, Betriebspunkt-abhängig eine Obergrenze und/oder einen Korridor (d.h. definierte Ober- und Untergrenzen) für die Stellgröße, beispielsweise die Heizerbeaufschlagung, insbesondere die Heizerspannung, vorzugeben, und damit eine Überhitzung der Sonde sicher zu verhindern.

Mögliche Ausgestaltungen des oben beschriebenen Kontrollschritts und der oben beschriebenen Beeinflussung können insbesondere sein:
(a) Abschaltung einer Sensorelementheizung (Heizerspannung 0V), wenn einer oder mehrere der beschriebenen Parameter einen oder mehrere Grenzwerte über- oder unterschreitet. Beispielsweise kann die Abschaltung einer Sensorelementheizung vorgesehen werden, wenn ein Sensorelementinnenwiderstand eine kritische Schwelle erreicht oder unterschreitet und/oder die Abgastemperatur und/oder eine andere Steuergröße, die einen Einfluss der Umgebung des Sensorelements auf die Temperatur des Sensorelements charakterisiert, eine kritische Schwelle erreicht oder überschreitet.
(b) Reduzierung der mindestens einen Stellgröße auf einen sicheren Wert, beispielsweise einen Default-Wert, wenn der mindestens eine Parameter einen Grenzwert erreicht oder über- oder unterschreitet, beispielsweise wenn die Stellgröße und/oder die Steuergröße einen Grenzwert über- oder unterschreitet oder erreicht. Beispielsweise kann eine Limitierung mindestens einer Beaufschlagung der Heizvorrichtung mit Heizenergie, beispielsweise eine Limitierung der Heizerspannung, vorgesehen sein, sodass ein kritischer Wert nicht überschritten werden kann. Ebenso kann, alternativ oder zusätzlich, vorgesehen sein, die Beaufschlagung der Heizvorrichtung mit Heizenergie, beispielsweise die Heizerspannung, zu reduzieren, wenn die Abgastemperatur eine kritische Schwelle erreicht und/oder überschreitet.
(c) Absolute Limitierung der Stellgröße, beispielsweise der die Heizleistung der Heizvorrichtung steuernden Größe, auf einen sicheren Wert, wenn der mindestens eine Parameter, beispielsweise die mindestens eine Steuergröße und/oder die mindestens eine Stellgröße, für eine gewisse Zeit einen Grenzwert über- oder unterschreitet. Damit kann insbesondere berücksichtigt werden, dass in der Regel ein bestimmter Wert der Steuergröße und/oder der Stellgröße kurzfristig unkritisch sein kann, aber kritisch werden kann, wenn dieser eine längere Zeit vorliegt. Dies wurde oben beschrieben, da auch zeitliche Verläufe ausgewertet werden können. Insbesondere kann eine Zeit, nach der eine Limitierung aktiviert wird, vorteilhafterweise abhängig von einem aktuellen Wert des mindestens einen Parameters gewählt werden, beispielsweise der mindestens einen Steuergröße und/oder der mindestens einen Stellgröße. Dadurch kann berücksichtigt werden, dass ein höherer Wert des mindestens einen Parameters schon nach kürzerer Zeit zur Überhitzung der Sonde führen kann als ein geringerer Wert bzw. umgekehrt. Eine weitere vorteilhafte Ausführung sieht vor, dass die Limitierung noch für eine gewisse Zeit aufrecht erhalten bleiben kann, auch wenn der mindestens eine Parameter, beispielsweise die mindestens eine Steuergröße und/oder die mindestens eine Stellgröße, kurzzeitig wieder in den unkritischen Bereich zurückfällt. Damit wird durch eine geeignete Durchführung des Kontrollschritts bzw. der Überprüfung eine verzögerte Reaktion der Sensorelementtemperatur auf Änderungen des mindestens einen Parameters berücksichtigbar. Beispielsweise kann vorgesehen sein, die Heizerspannung bzw. eine andere Art der Beaufschlagung der Heizvorrichtung mit Heizenergie, zu begrenzen, wenn diese eine gewisse Zeit einen kritischen Wert überschreitet. Die Zeit, nach der diese Limitierung aktiviert wird, kann abhängig sein vom aktuellen Wert der Heizleistung bzw. der Heizspannung bzw. des Parameters. Die Limitierung kann noch für eine gewisse Zeit aufrecht erhalten bleiben, auch wenn die Heizerspannung bzw. die Heizleistung kurzzeitig wieder unter den kritischen Wert fällt, um die verzögerte Abkühlung des Sensorelements nach einer Reduzierung der Heizerspannung zu berücksichtigen.
(d) Relative Limitierung der bei der Regelung generierten Stellgröße zu einer Steuer-Stellgröße der optional überlagerten Steuerung, beispielsweise durch eine relative Limitierung einer Heizerspannung gegenüber einer Vorsteuer-Heizerspannung. Dies kann derart durchgeführt werden, dass die aus der Kombination der überlagerten Steuerung und der Regelung resultierende mindestens eine Stellgröße, beispielsweise die mindestens eine Heizerspannung, einen Korridor um einen Vorsteuerwert nicht verlässt.
(e) Abschaltung der Regelung, beispielsweise der Heizungsregelung, und Umschalten auf reine Steuerung, beispielsweise auf reine Vorsteuerung, beispielsweise wenn der mindestens eine überprüfte Parameter, beispielsweise die mindestens eine Steuergröße und/oder Stellgröße, einen Grenzwert über- oder unterschreitet. Beispielsweise kann eine Abschaltung der Heizungsregelung und eine Umschaltung auf reine Vorsteuerung vorgesehen sein, wenn der Sensorelementinnenwiderstand unplausibel hoch ist, um zu verhindern, dass die Heizungsregelung die Heizerspannung auf unzulässig hohe Werte erhöht.
(f) Abschaltung eines optionalen Integralanteils der Regelung, wenn der mindestens eine Parameter einen Grenzwert erreicht, über- oder unterschreitet. Beispielsweise kann eine Abschaltung eines Integralanteils vorgesehen sein, wenn der Sensorelementinnenwiderstand unplausibel klein ist, beispielsweise um zu verhindern, dass ein eventuell falsch angelernter Integralanteil zu einer Erhöhung der Heizerspannung führt, obwohl das Sensorelement bereits eine zu hohe Temperatur aufweist.

Die oben genannten Ausführungen (a)-(f) können beliebig paarweise oder in Gruppen auch miteinander kombiniert werden und/oder mit anderen Ausgestaltungen der Erfindung kombiniert werden.

Die oben beschriebenen, bei dem vorgeschlagenen Verfahren verwendeten Größen, insbesondere die Regelgröße bzw. deren Istwert, der mindestens eine Parameter und die mindestens eine Steuergröße, können auf verschiedene Weisen erfasst und/oder bereitgestellt werden. Hierbei kann es sich beispielsweise um tatsächliche, gemessene Größen handeln, welche beispielsweise jedoch auch einer Nachbehandlung unterzogen werden können, beispielsweise einer Signalaufbereitung in Form einer Filterung oder ähnlichen Verfahren. Auch ein zeitlicher Verlauf dieser Größen kann optional aufgenommen und/oder verwendet werden. Wiederum alternativ oder zusätzlich können die genannten Größen, insbesondere der Istwert und/oder die mindestens eine optionale Steuergröße, auch modellierte Größen sein, welche beispielsweise mittels einer oder mehrerer Simulationsverfahren bestimmt werden können. In das vorgeschlagene Verfahren zur Einstellung der Temperatur können auf diese Weise beispielsweise eine Heizerspannung, eine Heizleistung, ein Sensorelementinnenwiderstand, Temperaturen (beispielsweise eine Abgastemperatur und/oder eine Rohrwandtemperatur und/oder andere Temperaturen), ein Motorbetriebspunkt (beispielsweise eine Motordrehzahl, eine Luftmenge oder ähnliche, den Motorbetriebspunkt charakterisierende Größen), ein Abgasgmassenstrom und/oder Abgasvolumenstrom, ein zeitlicher Verlauf oder ähnliche Größen eingehen. Das vorgeschlagene Verfahren und die vorgeschlagene Vorrichtung können allgemein insbesondere bei Temperatur-geregelten Abgassensoren jeglicher Art eingesetzt werden, insbesondere Sprungsonden, Breitbandsonden oder sonstigen beheizbaren Abgassensoren, insbesondere Sensorelementen mit der Eigenschaft einer hohen Heizleistungsreserve, die zu einer Zerstörung des Sensorelements durch Überhitzung bei Beheizung im grundsätzlich zulässigen Bordnetzspannungsbereich führen kann. Die Erfindung kann jedoch auch zur Einhaltung von Temperaturkorridoren unterhalb einer Schädigungsgrenze genutzt werden, beispielsweise bei NOₓ-Sensoren, die eine maximale Funktionsgenauigkeit bei niedrigen Betriebstemperaturen aufweisen. Die Erfindung ist insbesondere, jedoch nicht ausschließlich, im Kraftfahrzeugbereich einsetzbar, wobei keinerlei Begrenzung hinsichtlich der Fahrzeugsegmente, der Abgaszusammensetzung oder den Einsatzmarkt besteht.

### Kurze Beschreibung der Zeichnungen

Weitere Einzelheiten und Merkmale optionaler Ausgestaltungen der Erfindung ergeben sich aus den nachfolgenden Beschreibungen bevorzugter Ausführungsbeispiele.

Es zeigen:
Figur 1 ein Ausführungsbeispiel einer erfindungsgemäßen Sensorvorrichtung;
Figur 2 eine schematische Darstellung weiterer möglicher Einzelheiten einer erfindungsgemäßen Sensorvorrichtung;
Figur 3 ein Beispiel einer alterungsbedingten Innenwiderstands-Kennlinienverschiebung, welche mittels des vorgeschlagenen Verfahrens ausgeglichen werden kann; und
Figur 4 ein Ausführungsbeispiel möglicher Begrenzungen einer Heizerspannung mittels des vorgeschlagenen Verfahrens.

### Ausführungsformen der Erfindung

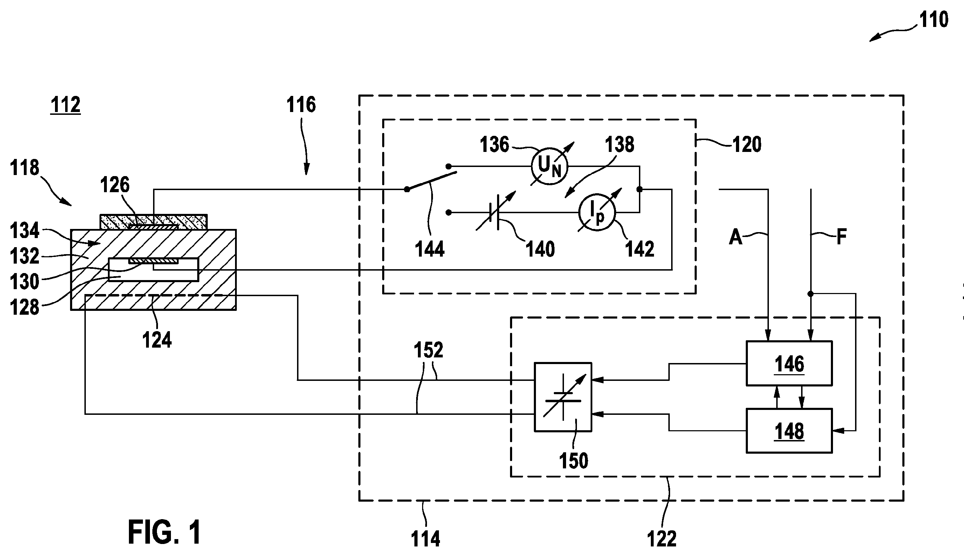

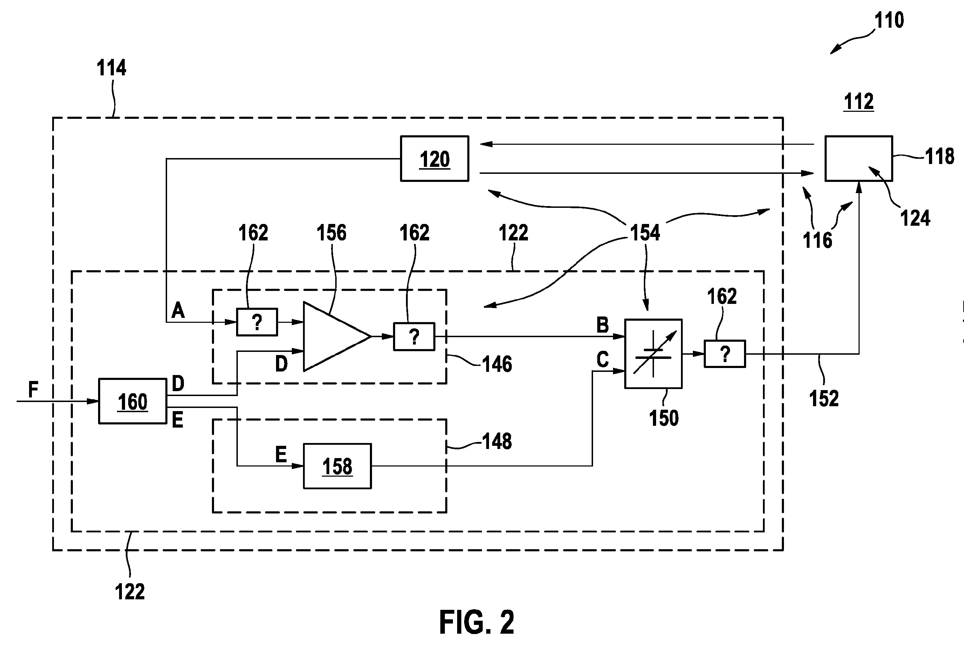

In Figur 1 ist ein erstes Ausführungsbeispiel einer schematischen Ausgestaltung einer erfindungsgemäßen Sensorvorrichtung 110 zur Erfassung mindestens einer Eigenschaft eines Gases in einem Messgasraum 112 dargestellt. Figur 2 zeigt ein weiteres Ausführungsbeispiel. Beide Ausführungsbeispiele werden im Folgenden im Wesentlichen gemeinsam beschrieben. Die Sensorvorrichtungen 110 umfassen jeweils eine Ansteuervorrichtung 114 und mindestens ein mit der Ansteuervorrichtung 114 über eine oder mehrere Schnittstellen 116 verbundene Sensorelemente 118. Die Ansteuervorrichtung 114 kann jedoch auch ganz oder teilweise in das Sensorelement 118 selbst integriert sein. Die Ansteuervorrichtung 114 ist in den Darstellungen in Figuren 1 und 2 als Einheit ausgebildet. Diese kann jedoch auch dezentral ausgestaltet sein und kann beispielsweise ganz oder teilweise auch in eine Motorsteuerung implementiert sein. Die Ansteuervorrichtung 114 umfasst eine Sensor-Ansteuervorrichtung 120, welche eingerichtet ist, um das Sensorelement 118 zur Erfassung der mindestens einen Eigenschaft anzusteuern und/oder entsprechende Signale zu erfassen. Weiterhin umfasst die Ansteuervorrichtung 114 eine Heizer-Ansteuervorrichtung 122, welche eingerichtet ist, um mindestens eine Heizvorrichtung 124 des Sensorelements anzusteuern, beispielsweise mit Heizenergie zu beaufschlagen, beispielsweise in Form einer Heizerspannung und/oder eines Heizerstroms, welcher kontinuierlich oder auch gepulst ausgestaltet sein kann. Während Figur 1 mögliche Einzelheiten der Ausgestaltung der Sensor-Ansteuervorrichtung 120 und des Sensorelements 118 zeigt, sind in Figur 2 optionale Einzelheiten der Heizer-Ansteuervorrichtung 122 gezeigt. Auf beide Figuren, die auch kombinierbar sind, kann im Folgenden Bezug genommen werden.

Das Sensorelement 118 ist in dem dargestellten Ausführungsbeispiel exemplarisch als einfache Sprungsonde mit einer dem Messgasraum 112 zuweisenden Außenelektrode 126 und einer in einem Referenzgasraum 128 angeordneten Referenzelektrode 130 ausgestaltet, welche über einen Festelektrolyten 132, beispielsweise Yttrium-stabilisiertes Zirkoniumdioxid, miteinander verbunden sind und eine Zelle 134 bilden. Auch andere Aufbauten des Sensorelements 118 sind jedoch möglich.

In dem in Figur 1 dargestellten exemplarischen Ausführungsbeispiel umfasst die Sensor-Ansteuervorrichtung 120 eine Messvorrichtung 136, um eine Nernstspannung U_{N} an der Zelle 134 zu erfassen. Weiterhin umfasst die Sensor-Ansteuervorrichtung 120 exemplarisch und optional eine Innenwiderstandsmessvorrichtung 138, welche der Messvorrichtung 136 parallel geschaltet sein kann und welche beispielsweise eine Pumpstromquelle und/oder Pumpspannungsquelle 140 und eine zu dieser beispielsweise in Reihe geschaltete Pumpstrommessvorrichtung 142 umfassen kann. Weiterhin kann ein Schalter 144 vorgesehen sein, sodass mittels der Innenwidersandsmessvorrichtung 138 kurzfristig ein Pumpspannungspuls und/oder Pumpstrompuls auf die Zelle 134 aufgegeben werden kann, um durch eine entsprechende Strommessung des Pumpstroms Iₚ den Innenwiderstand der Zelle 134 zu bestimmen, welcher wiederum ein Maß für die Temperatur des Sensorelements 118 sein kann und damit beispielsweise direkt oder indirekt als Istwert (in Figur 1 und in Figur 2 mit "A" bezeichnet) einer Regelgröße verwendet werden kann.

Für mögliche Ausgestaltungen der Heizer-Ansteuervorrichtung 122 wird im Folgenden exemplarisch auf die Figur 2 verwiesen. Hieraus ist erkennbar, dass in dem dargestellten Ausführungsbeispiel die Heizer-Ansteuervorrichtung 122 insbesondere mehrteilig ausgestaltet sein kann und beispielsweise mindestens eine Regelvorrichtung 146 und optional mindestens eine Steuervorrichtung 148 umfassen kann. Weiterhin kann die Heizer-Ansteuervorrichtung 122 mindestens ein Stellglied 150 umfassen. Dieses Stellglied 150 kann beispielsweise eingerichtet sein, um, entsprechend einer von der Regelvorrichtung 146 bereiten Stellgröße B und/oder einer von der optionalen Steuervorrichtung 148 bereitgestellten Steuer-Stellgröße C, welche auch als Vorsteuergröße bezeichnet werden kann, über eine oder mehrere Heizerleitungen 152 elektrische Energie an die Heizvorrichtung 124 bereitzustellen. Dabei ist in Figur 2 lediglich ein Stellglied 150 dargestellt. Es können jedoch auch mehrere Stellglieder vorgesehen sein. So können beispielsweise die Regelvorrichtung 146 und die Steuervorrichtung 148 über eigene, getrennte Stellglieder 150 verfügen, deren Ausgangssignale anschließend kombiniert werden können.

Die Regelvorrichtung 146, das Stellglied 150, das Sensorelement 118 und die Sensor-Ansteuervorrichtung 120 können gemeinsam einen Regelkreis 154 bilden. Die Regelvorrichtung 146 kann eine Vergleichseinrichtung 156 umfassen, in welcher der Istwert A der Regelgröße mit einem Sollwert D der Regelgröße verglichen werden, um daraus die Stellgröße B zu ermitteln. Es sei darauf hingewiesen, dass die Regelvorrichtung 146 darüber hinaus weitere Elemente umfassen kann. Die Steuervorrichtung 148 kann insbesondere ein Steuer-Stellglied 158 umfassen, mittels dessen aus einer Führungsgröße E die Steuer-Stellgröße C gebildet wird. Die Stellgröße B und die Steuer-Stellgröße C können einander überlagert werden, was sequenziell oder auch parallel erfolgen kann. Dies ist in Figur 2 stark vereinfacht dargestellt. Beispielsweise können diese Signale addiert werden. Alternativ können, wie oben beschrieben, auch unterschiedliche Stellglieder 150 für die Regelvorrichtung 146 und die Steuervorrichtung 148 verwendet werden.

Zur Vorgabe des Sollwerts D und/oder der Führungsgröße E kann die Heizer-Ansteuervorrichtung 122 weiterhin einen in Figur 2 angedeuteten Controller 160 umfassen. Dieser kann mit mindestens einer Steuergröße beaufschlagt werden, welche in den Figuren 1 und 2 mit F bezeichnet ist und welche einen Einfluss einer Umgebung des Sensorelements 118 auf die Temperatur des Sensorelements 118 charakterisiert. Für mögliche Ausgestaltungen dieser Steuergröße F kann auf die obige Beschreibung verwiesen werden. Hier können insbesondere Temperaturen der Umgebung des Sensorelements 118, beispielsweise Gastemperaturen und/oder Rohrwandungstemperaturen, und/oder einen Strom des Gases charakterisierende Parameter einfließen. Der Controller 160 kann, optional unter Berücksichtigung dieser mindestens einen Steuergröße, die Führungsgröße E vorgeben und damit die Vorsteuerung mittels der Steuervorrichtung 148 beeinflussen. Alternativ oder zusätzlich kann auch der Istwert E von dem Controller 160 vorgegeben werden. Die Auswahl der Führungsgröße E und/oder des Sollwerts D kann beispielsweise unter Verwendung von entsprechenden Auswahlalgorithmen erfolgen, beispielsweise durch Kennlinienfelder, Auswahlfunktionen oder Ähnliches. Der Controller 160 kann beispielsweise mindestens eine Datenverarbeitungsvorrichtung und/oder mindestens ein Speicherelement umfassen, mittels derer diese Auswahlalgorithmen umsetzbar sind.

Weiterhin kann die Heizer-Ansteuervorrichtung ein oder mehrere Kontrollelemente 162 umfassen, welche in Figur 2 exemplarisch angedeutet sind. Diese können an unterschiedlichen Stellen angeordnet sein und können jedoch auch ganz oder teilweise mit dem Controller 160 zusammengefasst sein. Diese Kontrollelemente 162 sind eingerichtet zur Durchführung des oben beschriebenen mindestens einen Kontrollschritts, in welchem mindestens ein zur Einstellung der Temperatur verwendeter Parameter, in dem dargestellten Ausführungsbeispiel die Parameter A, B sowie optional die von dem Stellglied 150 bereitgestellte Heizerleistung (beispielsweise der Heizerstrom, die Heizerspannung oder ähnliche Parameter) überprüft und gegebenenfalls beeinflusst werden können. Für weitere Einzelheiten kann auf die obige Beschreibung verwiesen werden.

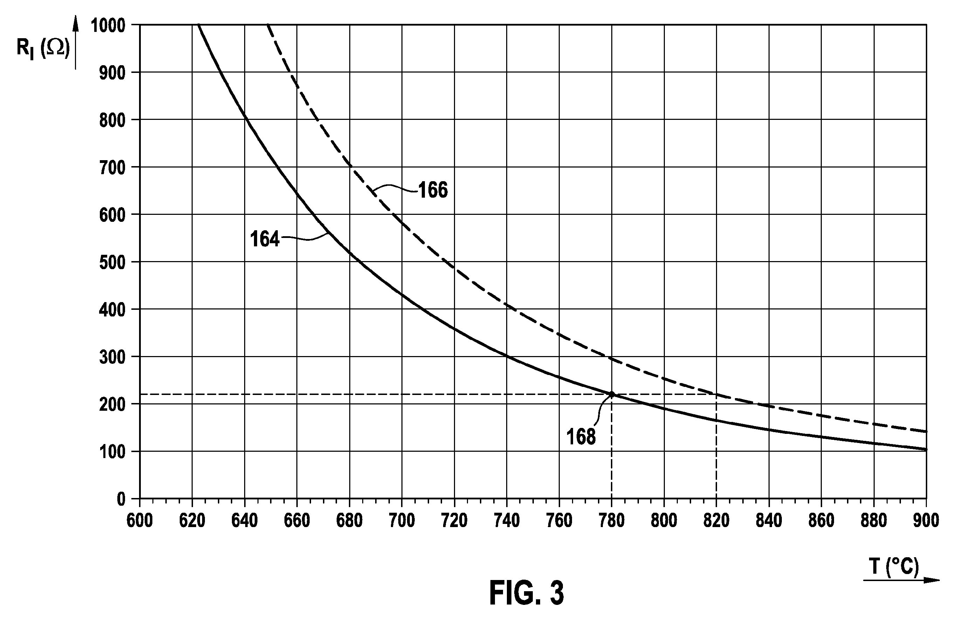

Mittels des oben beschriebenen Verfahrens und beispielsweise mittels einer oder mehrerer der in den Figuren 1 und 2 beschriebenen Sensorvorrichtungen 110 kann beispielsweise einem in Figur 3 beschriebenen Effekt entgegengewirkt werden. So sind in Figur 3 Innenwiderstände R_{I} einer Nernstzelle, beispielsweise der Zelle 134 des Sensorelements 118 gemäß Figur 1, für typische Sensorelemente 118 als Funktion der Temperatur T eines keramischen Festelektrolyten 132 aufgetragen. Dabei zeigt die Kurve 164 ein neues Sensorelements, wohingegen die Kurve 166 das Verhalten eines gealterten Sensorelements zeigt. Ein gewünschter Betriebspunkt eines neuen Sensorelements ist in Figur 2 mit 168 bezeichnet. So soll die Temperatur des Sensorelements idealerweise beispielsweise auf 780°C eingestellt werden, was bei einem neuen Sensorelement einem Innenwiderstand von 220Ω entspricht. Wird dieser Innenwiderstand R_{I} als Regelgröße verwendet, so zeigt die Kurve 166 des gealterten Sensorelements hingegen, dass bei dem gealterten Sensorelement dieser Innenwiderstand von 220Ω einer Temperatur von 820°C entspricht, also einer Abweichung von 40°C. Diese Abweichung macht sich empfindlich bei der Sensorgenauigkeit bemerkbar. Um diese Temperatur von 820°C zu erreichen, ist jedoch eine erheblich höhere Heizleistung erforderlich. Die beispielsweise in Figur 2 beschriebene Regelung würde somit, beispielsweise am Ausgang der Vergleichseinrichtung 156 und/oder am Ausgang des Stellglieds 150, höhere Werte liefern als im Vergleich des neuen Sensorelements. Durch die einen oder mehrere Kontrollelemente 162 kann eine derartige Abweichung erkannt werden, und es können gegebenenfalls entsprechende Gegenmaßnahmen durch Korrektur in dem Kontrollschritt und durch entsprechende Beeinflussung der Stellgröße ergriffen werden.

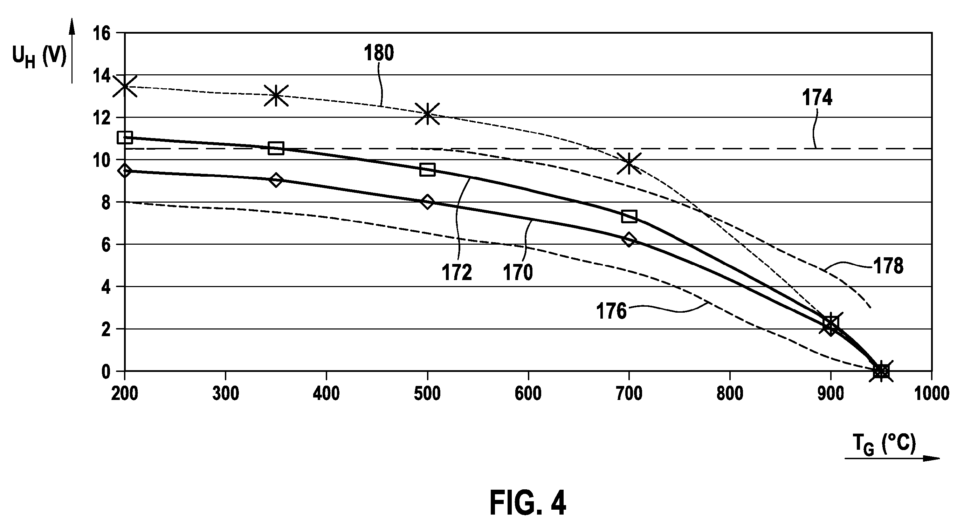

In Figur 4 sind exemplarisch verschiedene Möglichkeiten einer Überlagerung einer Steuerung und einer Regelung, unter gleichzeitiger Implementierung des oben beschriebenen Verfahrens und unter Berücksichtigung einer Abgastemperatur T_{G} als Steuergröße beschrieben. Aufgetragen ist hierbei auf der vertikalen Achse eine Größe, die die Heizleistung der Heizvorrichtung 124 charakterisiert und welche hier mit U_{H} bezeichnet ist. Hierbei kann es sich beispielsweise um die Heizerspannung handeln, wobei jedoch auch andere, die Heizleistung charakterisierende Größen aufgetragen sein können. Zunächst erfolgt eine Vorsteuerung, beispielsweise mittels der Steuervorrichtung 148. Die in Figur 4 aufgetragenen Kennlinien zeigen, welche Heizleistung U_{H} bei welcher Temperatur des Gases in dem Messgasraum 112 von der Ansteuervorrichtung 114 bereitgestellt werden muss, um das Sensorelement auf einer konstanten Temperatur, beispielsweise den 780°C gemäß Figur 3, zu halten. Bei niedrigeren Abgastemperaturen ist eine entsprechend höhere Heizleistung erforderlich als bei hohen Abgastemperaturen. Wiederum zeigt die Kurve 170 eine Kennlinie eines neuen Sensorelements, wohingegen die Kurve 172 eine Kennlinie eines gealterten Sensorelements zeigt. Derartige Kennlinien 170, 172 können beispielsweise in dem Controller 160 hinterlegt sein, sodass beispielsweise die Werte D und E in Figur 2 entsprechend gewählt werden können.

Die Beeinflussung der mindestens einen Stellgröße in dem mindestens einen Kontrollschritt, beispielsweise mittels der Kontrollelemente 162 in Figur 2, kann auf verschiedene, in Figur 4 dargestellte Weisen erfolgen. Beispielsweise kann eine absolute Deckelung 174 auf einen fest vorgegebenen Grenzwert der Heizleistung erfolgen. Alternativ oder zusätzlich können jedoch auch beispielsweise dynamische Grenzwerte vorgegeben werden, beispielsweise in Form eines unteren Grenzwerts 176 und/oder eines oberen Grenzwerts 178, welche beispielsweise um die Kennlinien 170, 172 herum angeordnet werden können. Beispielsweise können bei Erreichen dieser Grenzwerte 174, 176, 178 Default-Werte eingenommen werden und/oder die Heizleistung kann abgeschaltet werden und/oder es können eine oder mehrere andere der oben beschriebenen Beeinflussungsmaßnahmen ergriffen werden. Die Kurve 180 zeigt schließlich einen Fehlerfall, bei welchem die Heizleistung im Bereich von Abgastemperaturen unterhalb von ca. 670°C die absolute Deckelung 174 weit übersteigen würde.

## Patentansprüche

1. Verfahren zur Einstellung einer Temperatur eines mittels einer Heizvorrichtung (124) beheizbaren Sensorelements (118) zur Erfassung mindestens einer Eigenschaft eines Gases in einem Messgasraum (112), insbesondere zur Erfassung eines Anteils mindestens einer Gaskomponente in dem Gas, wobei das Verfahren mindestens eine Regelung der Heizvorrichtung (124) umfasst, wobei die Regelung folgende Verfahrensschritte umfasst:
a) Erfassung mindestens eines Istwertes mindestens einer Regelgröße des Sensorelements (118),
b) Ermittlung eines Sollwertes der zumindest einen Regelgröße,
c) Erzeugung mindestens einer Stellgröße der Heizvorrichtung (124) mittels eines Vergleiches des Sollwertes und des Istwertes,
d) Durchführung mindestens eines Kontrollschritts, wobei in dem Kontrollschritt mindestens ein zur Einstellung der Temperatur verwendeter Parameter überprüft wird und wobei die mindestens eine Stellgröße in Abhängigkeit von der Überprüfung beeinflusst wird, wobei der in dem Kontrollschritt überprüfte Parameter die mindestens eine Stellgröße ist,
**dadurch gekennzeichnet, dass** die Beeinflussung derart erfolgt, dass die mindestens eine Stellgröße auf einen sicheren Wert limitiert wird, wenn die mindestens eine Stellgröße für eine gewisse Zeit einen Grenzwert über- oder unterschreitet.

2. Verfahren nach dem vorhergehenden Anspruch, wobei weiterhin mindestens eine Steuergröße erfasst wird, wobei die Steuergröße einen Einfluss einer Umgebung des Sensorelements (118) auf die Temperatur des Sensorelements (118) charakterisiert, insbesondere einer Steuergröße ausgewählt aus: einer Umgebungstemperatur des Sensorelements (118); einem Betriebsparameter einer das Gas beinhaltenden, generierenden oder verwendenden Vorrichtung, insbesondere einem Betriebsbereich einer Verbrennungsmaschine, vorzugsweise einem Motorbetriebspunkt; einen Parameter, der einen in der Umgebung des Sensorelements (118) auftretenden Gasstrom charakterisiert; einen Parameter, der eine in der Umgebung des Sensorelements auftretende Temperatur charakterisiert und insbesondere quantifiziert, insbesondere eine Abgastemperatur, eine Katalysatortemperatur und/oder eine Rohrwandtemperatur; einer Motordrehzahl; einem Motor-Lastzustand.

3. Verfahren nach einem der vorhergehenden Ansprüche, wobei das Verfahren weiterhin eine Steuerung der Heizvorrichtung (124) umfasst, wobei die Regelung der Steuerung zumindest zeitweise überlagert wird.

4. Verfahren nach Anspruch 3, wobei die Steuerung der Heizvorrichtung (124) unter Berücksichtigung der Steuergröße erfolgt.

5. Verfahren nach Anspruch 3 oder 4, wobei die Ermittlung des Sollwerts und vorzugsweise auch die Steuerung unter Berücksichtigung der Steuergröße erfolgt.

6. Verfahren nach einem der vorhergehenden Ansprüche, wobei die mindestens eine Regelgröße aus folgender Gruppe ausgewählt ist: mindestens einem Innenwiderstand des Sensorelements (118), insbesondere einem Innenwiderstand mindestens einer elektrochemischen Zelle (134) des Sensorelements (118); einer Temperatur des Sensorelements (118); einer Spannung zwischen mindestens zwei Elektroden (126, 130) des Sensorelements (118), insbesondere zwischen zwei Elektroden (126, 130) einer Nernstzelle (134) des Sensorelements (118); einem Strom zwischen mindestens zwei Elektroden (126, 130) des Sensorelements (118), insbesondere zwischen mindestens zwei Elektroden (126, 130) einer Pumpzelle (134) des Sensorelements (118); einem elektrischen Widerstand einer leitenden Struktur, insbesondere einer leitenden Struktur des Sensorelements (118).

7. Verfahren nach einem der vorhergehenden Ansprüche, wobei die Stellgröße aus folgender Gruppe ausgewählt ist: einer an der Heizvorrichtung (124) anliegende Heizspannung; einer an der Heizvorrichtung (124) anliegenden Heizleistung; einem an der Heizvorrichtung (124) anliegenden Heizstrom; einem Parameter einer Pulsweitenmodulation einer an der Heizvorrichtung (124) anliegenden Heizleistung.

8. Verfahren nach einem der vorhergehenden Ansprüche, wobei die Überprüfung des Parameters in dem Kontrollschritt eine oder mehrere der folgenden Überprüfungen umfasst:
- Eine Abfrage, ob der Parameter mindestens einen fest oder dynamisch vorgegebenen Schwellwert erreicht, unterschreitet oder überschreitet und optional gegebenenfalls wie lange dies der Fall ist;
- Eine Abfrage, ob eine zeitliche Schwankung des Parameter über einen Messzeitraum hinweg eine vorgegebene Maximalschwankung unterschreitet, erreicht oder überschreitet und optional gegebenenfalls wie lange dies der Fall ist;
- Einen Vergleich eines zeitlichen Verlaufs des Parameters mit mindestens einem Sollverlauf.

9. Verfahren nach einem der vorhergehenden Ansprüche, wobei die Beeinflussung der Stellgröße in dem Kontrollschritt eine oder mehrere der folgenden Beeinflussungen umfasst:
- Eine Verwerfung eines einzelnen oder mehrerer Werte des Parameters und eine daraus resultierende Beeinflussung der Stellgröße, insbesondere eine Verwerfung stark schwankender zeitlich benachbarter Messwerte des Parameters;
- Eine Filterung des Istwerts und eine daraus resultierende Beeinflussung der Stellgröße;
- Eine Mittelwertbildung des Istwerts und eine daraus resultierende Beeinflussung der Stellgröße;
- Eine Begrenzung der Stellgröße durch einen fest oder dynamisch vorgegebenen Minimalwert oder Maximalwert;
- Ein Setzen der Stellgröße auf einen Default-Wert;
- Eine Verringerung der Stellgröße um einen vorgegebenen Betrag oder einen Korrekturfaktor;
- Eine Umwandlung der Stellgröße mit mindestens einer Korrekturfunktion in eine veränderte Stellgröße;
- Eine Veränderung mindestens eines Regelkreises (154) zur Einstellung der Temperatur, insbesondere eine Abschaltung eines integralen Anteils des Regelkreises;
- Eine Abschaltung der Regelung.

10. Sensorvorrichtung (110) zur Erfassung mindestens einer Eigenschaft eines Gases in einem Messgasraum (112), insbesondere zur Bestimmung eines Anteils einer Gaskomponente, wobei die Sensorvorrichtung (110) mindestens ein Sensorelement (118) zur Erfassung der Eigenschaft umfasst, wobei die Sensorvorrichtung (110) mindestens eine Heizvorrichtung (124) zur Beheizung zumindest eines Teils des Sensorelements (118) umfasst, wobei die Sensorvorrichtung (110) weiterhin mindestens eine Ansteuervorrichtung (114) umfasst, **dadurch gekennzeichnet,dass** die Ansteuervorrichtung (114) eingereichtet ist, um ein Verfahren nach einem der vorhergehenden Ansprüche durchzuführen.

## Claims

1. Method for setting a temperature of a sensor element (118), which can be heated by means of a heating device (124) and is intended for detecting at least one property of a gas in a measuring gas chamber (112), in particular for detecting a fraction of at least one gas component in the gas, the method comprising at least a closed-loop control of the heating device (124), the closed-loop control comprising the following method steps:
a) detecting at least one actual value of at least one controlled variable of the sensor element (118),
b) ascertaining a setpoint value of the at least one controlled variable,
c) generating at least one manipulated variable of the heating device (124) by means of a comparison of the setpoint value and the actual value,
d) carrying out at least one monitoring step, at least one parameter that is used for setting the temperature being checked in the monitoring step and the at least one manipulated variable being influenced on the basis of the check, the parameter that is checked in the monitoring step being the at least one manipulated variable,
**characterized in that** the influencing takes place in such a way that the at least one manipulated variable is limited to a safe value if the at least one manipulated variable goes above or below a limit value for a certain time.

2. Method according to the preceding claim, at least one controlling variable also being detected, the controlling variable characterizing an influence of surroundings of the sensor element (118) on the temperature of the sensor element (118), in particular a controlling variable selected from: a surrounding temperature of the sensor element (118); an operating parameter of a device that contains, generates or uses the gas, in particular an operating region of an internal combustion engine, preferably an engine operating point; a parameter which characterizes a gas flow occurring in the surroundings of the sensor element (118); a parameter which characterizes and in particular quantifies a temperature occurring in the surroundings of the sensor element, in particular an exhaust-gas temperature, a catalyst temperature and/or a tube-wall temperature; an engine speed; or an engine load state.

3. Method according to one of the preceding claims, the method also comprising an open-loop control of the heating device (124), the closed-loop control being superimposed on the open-control at least for a certain time.

4. Method according to Claim 3, the open-loop control of the heating device (124) being performed with the controlling variable taken into account.

5. Method according to Claim 3 or 4, the ascertainment of the setpoint value and preferably also the open-loop control being performed with the controlling variable taken into account.

6. Method according to one of the preceding claims, the at least one controlled variable being selected from the following group: at least one internal resistance of the sensor element (118), in particular an internal resistance of at least one electrochemical cell (134) of the sensor element (118); a temperature of the sensor element (118); a voltage between at least two electrodes (126, 130) of the sensor element (118), in particular between two electrodes (126, 130) of a Nernst cell (134) of the sensor element (118); a current between at least two electrodes (126, 130) of the sensor element (118), in particular between at least two electrodes (126, 130) of a pumping cell (134) of the sensor element (118); or an electrical resistance of a conducting structure, in particular a conducting structure of the sensor element (118).

7. Method according to one of the preceding claims, the manipulated variable being selected from the following group: a heating voltage applied to the heating device (124); a heating power applied to the heating device (124); a heating current applied to the heating device (124); or a parameter of a pulse width modulation of a heating power applied to the heating device (124).

8. Method according to one of the preceding claims, the checking of the parameter in the monitoring step comprising one or more of the following checks:
- an inquiry whether the parameter reaches, is below or is above at least one fixedly or dynamically predefined threshold value and optionally if applicable for how long this has been the case;
- an inquiry whether a time variation of the parameter over a measuring period of time is below, reaches or is above a predefined maximum variation and optionally if applicable for how long this has been the case; and
- a comparison of a time curve of the parameter with at least one setpoint curve.

9. Method according to one of the preceding claims, the influencing of the manipulated variable in the monitoring step comprising one or more of the following influences:
- a rejection of a single or a number of values of the parameter and a resultant influencing of the manipulated variable, in particular a rejection of greatly varying measured values from successive times of the parameter;
- a filtering of the actual value and a resultant influencing of the manipulated variable;
- an averaging of the actual value and a resultant influencing of the manipulated variable;
- a limiting of the manipulated variable by a fixedly or dynamically predefined minimum value or maximum value;
- a setting of the manipulated variable to a default value;
- a reduction of the manipulated variable by a predefined absolute amount or a correction factor;
- a conversion of the manipulated variable with at least one correction function into a changed manipulated variable;
- a modification of at least one control loop (154) for setting the temperature, in particular a switching off of an integral-action component of the control loop; and
- a switching off of the closed-loop control.

10. Sensor device (10) for detecting at least one property of a gas in a measuring gas chamber (112), in particular for determining a fraction of a gas component, the sensor device (110) comprising at least one sensor element (118) for detecting the property, the sensor device (110) comprising at least one heating device (124) for heating at least part of the sensor element (118), the sensor device (110) also comprising at least one activating device (114), **characterized in that** the activating device (114) is designed for carrying out a method according to one of the preceding claims.

## Revendications

1. Procédé pour régler une température d'un élément de détection (118) pouvant être chauffé au moyen d'un dispositif de chauffage (124) et destiné à détecter au moins une propriété d'un gaz dans une chambre à gaz de mesure (112), notamment destiné à détecter une proportion d'au moins une composante gazeuse dans le gaz, le procédé comprenant au moins une régulation du dispositif de chauffage (124), la régulation comprenant les étapes suivantes :
a) détection d'au moins une valeur réelle d'au moins une grandeur de régulation de l'élément de détection (118),
b) détermination d'une valeur de consigne de l'au moins une grandeur de régulation ;
c) génération d'au moins une grandeur de réglage du dispositif de chauffage (124) au moyen d'une comparaison de la valeur de consigne et de la valeur réelle,
d) exécution d'au moins une étape de contrôle, au moins un paramètre utilisé pour le réglage de la température étant vérifié dans l'étape de contrôle et l'au moins une grandeur de réglage étant influencée en fonction de la vérification, le paramètre vérifié dans l'étape de contrôle étant l'au moins une grandeur de réglage,
**caractérisé en ce que** l'influence est exercée de telle sorte que l'au moins une grandeur de réglage est limitée à une valeur sécurisée lorsque l'au moins une grandeur de réglage devient supérieure ou inférieure à une valeur limite pendant une durée donnée.

2. Procédé selon la revendication précédente, au moins une grandeur de commande étant en outre détectée, la grandeur de commande caractérisant une influence d'un environnement de l'élément de détection (118) sur la température de l'élément de détection (118), notamment une grandeur de commande choisie parmi : une température ambiante de l'élément de détection (118) ; un paramètre de fonctionnement d'un dispositif contenant, générant ou utilisant le gaz, notamment une plage de fonctionnement d'un moteur à combustion interne, de préférence un point de fonctionnement de moteur ; un paramètre qui caractérise un courant de gaz qui se produit dans l'environnement de l'élément de détection (118) ; un paramètre qui caractérise, et notamment quantifie, une température qui se produit dans l'environnement de l'élément de détection, notamment une température des gaz d'échappement, une température de catalyseur et/ou une température de paroi de tube ; une vitesse de rotation de moteur ; un état de charge du moteur.

3. Procédé selon l'une des revendications précédentes, le procédé comprenant en outre une commande du dispositif de chauffage (124), la régulation étant au moins temporairement superposée à la commande.

4. Procédé selon la revendication 3, la commande du dispositif de chauffage (124) étant effectuée en tenant compte de la grandeur de commande.

5. Procédé selon la revendication 3 ou 4, la détermination de la valeur de consigne et de préférence aussi la commande étant effectuées en tenant compte de la grandeur de commande.

6. Procédé selon l'une des revendications précédentes, l'au moins une grandeur de régulation étant choisie parmi le groupe suivant : au moins une résistance interne de l'élément de détection (118), notamment une résistance interne d'au moins une cellule électrochimique (134) de l'élément de détection (118) ; une température de l'élément de détection (118) ; une tension entre au moins deux électrodes (126, 130) de l'élément de détection (118), notamment entre deux électrodes (126, 130) d'une cellule de Nernst (134) de l'élément de détection (118) ; un courant entre au moins deux électrodes (126, 130) de l'élément de détection (118), notamment entre au moins deux électrodes (126, 130) d'une cellule de pompage (134) de l'élément de détection (118) ; une résistance électrique d'une structure conductrice, notamment d'une structure conductrice de l'élément de détection (118).

7. Procédé selon l'une des revendications précédentes, la grandeur de réglage étant choisie parmi le groupe suivant : une tension de chauffage appliquée au dispositif de chauffage (124) ; une puissance de chauffage appliquée au dispositif de chauffage (124) ; un courant de chauffage appliqué au dispositif de chauffage (124) ; un paramètre d'une modulation d'impulsions en largeur d'une puissance de chauffage appliquée au dispositif de chauffage (124).

8. Procédé selon l'une des revendications précédentes, la vérification du paramètre dans l'étape de contrôle comprenant une ou plusieurs des vérifications suivantes :
- une interrogation visant à vérifier si le paramètre atteint au moins une valeur de seuil fixe ou prédéfinie de manière dynamique, y devient inférieur ou y devient supérieur et, en option, pendant combien de temps c'est le cas ;
- une interrogation visant à vérifier si une fluctuation dans le temps du paramètre au-delà d'une période de mesure devient inférieure à une fluctuation maximale prédéfinie, l'atteint ou y devient supérieure et, en option, pendant combien de temps c'est le cas ;
- une comparaison d'une courbe dans le temps du paramètre avec au moins une courbe de consigne.

9. Procédé selon l'une des revendications précédentes, l'influence de la grandeur de réglage dans l'étape de contrôle comprenant une ou plusieurs des influences suivantes :
- un rejet d'une valeur individuelle ou de plusieurs valeurs du paramètre et une influence en résultant de la grandeur de réglage, notamment un rejet des valeurs mesurées du paramètre voisines dans le temps et fortement fluctuantes ;
- un filtrage de la valeur réelle et une influence en résultant de la grandeur de réglage ;
- un calcul de la moyenne de la valeur réelle et une influence en résultant de la grandeur de réglage ;
- une limitation de la grandeur de réglage par une valeur minimale ou une valeur maximale fixe ou prédéfinie de manière dynamique ;
- une fixation de la grandeur de réglage à une valeur par défaut ;
- une réduction de la grandeur de réglage d'un montage prédéfini ou d'un facteur de correction ;
- une conversion de la grandeur de réglage avec au moins une fonction de correction en une grandeur de réglage modifiée ;
- une modification d'au moins un circuit de régulation (154) destiné à régler la température, notamment une déconnexion d'une part intégrale du circuit de régulation ;
- une déconnexion de la régulation.

10. Dispositif de détection (110) destiné à détecter au moins une propriété d'un gaz dans une chambre à gaz de mesure (112), notamment destiné à détecter une proportion d'une composante gazeuse, le dispositif de détection (110) comprenant au moins un élément de détection (118) destiné à détecter la propriété, le dispositif de détection (110) comprenant au moins un dispositif de chauffage (124) destiné à chauffer au moins une partie de l'élément de détection (118), le dispositif de détection (110) comprenant en outre au moins un dispositif de commande (114), **caractérisé en ce que** le dispositif de commande (114) est conçu pour mettre en oeuvre un procédé selon l'une des revendications précédentes.
